# EUROPEAN PATENT SPECIFICATION

(11) **EP 3 714 707 B1**
(45) Date of publication and mention of the grant of the patent: **02.11.2022**
(21) Application number: 19166215.4
(22) Date of filing: 29.03.2019
(51) Int. Cl.: G01N 21/954, A24C 5/34, G01N 21/952

(54) **A MEASURING SYSTEM FOR CONTROLLING A QUALITY OF A TUBE AND A METHOD FOR CONTROLLING A QUALITY OF A TUBE**
MESSSYSTEM ZUR KONTROLLE DER QUALITÄT EINES ROHRS UND EIN VERFAHREN ZUR KONTROLLE DER QUALITÄT EINER STANGE
SYSTÈME DE MESURE PERMETTANT DE CONTRÔLER LA QUALITÉ D'UN TUBE ET PROCÉDÉ DE CONTRÔLE DE LA QUALITÉ D'UNE TUBE

(43) Date of publication of application: 30.09.2020
(73) Proprietor: International Tobacco Machinery Poland SP. Z O.O., 26-600 Radom (PL)
(72) Inventor: WITKOWSKI, Maciej, 26-600 Radom (PL)
(74) Representative: Kancelaria Eupatent.pl Sp. z.o.o

(56) References cited:
- EP-A1- 3 323 738
- CN-Y- 201 059 965
- DE-U1-202017 006 788
- JP-A- S50 149 394
- JP-U- S62 150 609
- US-A- 3 980 567
- US-A1- 2013 070 240

## Description

### TECHNICAL FIELD

The present disclosure relates to a tube quality inspection system and a method for inspecting a tube, in particular in tobacco industry machines.

### BACKGROUND

In tobacco industry, semi-finished products such as filtering material rods, multichannel rods, rods made of spongy material, thin-walled and thick-walled tubes and other rods, which are needed for forming a smoke stream or for producing scent, are used for manufacturing rod-like elements such as filters with a mouthpiece or multi-segment filter rods. During transportation of such elements, usually in a form of mass-flow by means of trays, the elements may become deformed. It is caused by the fact that sometimes the elements are transported in the mass-flow over long distances wherein the direction of displacement is altered, and the elements in the tray may be squeezed under pressure of remaining elements.

Most of the filled rod-like elements exhibit some resilience, however paperboard or paper tube rod-like elements, in particular which are thin-walled, are substantially easily deformable. Due to the necessity of maintaining high quality of finished products, there is a need for inspecting the quality of semi-products, in particular their shape, wherein the deformation of the element may be accessed basing on the shape of its end.

From the state of the art there are known systems for quality inspection, in which cameras for inspecting the shape of rod-like elements are used.

A US patent document US4976544 discloses a device equipped with a camera for inspecting the circularity of cigarette ends located in the tray. The device is equipped with a rejecting unit for rejecting faulty cigarettes.

An PCT publication WO 2015/138440 discloses a device, in which by means of a camera an image of rod-like elements ends is registered, and in case of lack of circularity of the tip the element may be rejected from production.

A European patent application EP2677273 discloses an optical device for inspecting the quality of rod-like elements which are transported in ducts of a drum, wherein the quality inspection is performed by means of optical devices, for example by means of a camera. The rod-like elements are transferred by means of a drum transporter transversally to the direction of in which the quality inspection of both ends is performed.

A US patent document US5519494A discloses a measurement device for inspecting surface roughness of tubes, in which a source of radiation and a receiver are located at the opposite ends of the inspected tube. For registering images of both ends of the rod-like element, including the tube element, it is essential to use two cameras, which significantly increases costs of the measurement device. Further relevant prior art is disclosed in US 2013/070240, JP S62150609, JP S50149394, DE 202017006788, US 3980567, CN 201059965 and EP 3323738.

### SUMMARY

An object of the invention is an inspection system for controlling quality of a tube a method for inspecting quality of a tube according to the appended claims

### BRIEF DESCRIPTION OF FIGURES

The present invention is shown by means of example embodiments in a drawing, in which:
Fig. 1 presents an inspection system in a first embodiment;
Fig. 2 presents an image of a tube in a view at a first end side;
Fig. 3 presents an image of the tube in a view at a second end side;

Preferably, in the inspection system the radiation source, the radiation receiver and the means for altering the direction of the radiation beam are arranged such that the path of the radiation beam extends from the radiation source to the means partially reflecting the radiation, from these means propagates through the radiation reflecting means through the interior of the tube, through radiation reflecting means and propagates through the means partially reflecting the radiation, to the radiation receiver.

Preferably, in the inspection system the radiation source, the radiation receiver and means for altering the direction of the radiation beam are distributed such that the path of the first radiation beam from the first radiation source extends to the first means partially reflecting the radiation, from these means propagates through radiation reflecting means, through the interior of the tube, through the radiation reflecting means and propagates through the second means partially reflecting the radiation, to the radiation receiver, wherein the path of the second radiation beam from the second radiation source extends to the second means partially reflecting the radiation, from these means propagates through the radiation reflecting means and the interior of the tube, through the radiation reflecting means and propagates through the first means partially reflecting the radiation, to the radiation receiver.

Preferably, in the inspection system the radiation source, the radiation receiver and the means for altering the direction of the radiation beam are distributed such that the path of the first radiation beam extends from the radiation source to the first means partially reflecting the radiation, through the radiation reflecting means through the interior of the tube, further through the second means party reflecting the radiation, to the radiation receiver, wherein the path of the second radiation beam from the second radiation source extends to the second means partially reflecting the radiation, from these means propagates through the interior of the tube, further through the radiation reflecting means and through the first means partially reflecting the radiation, to the radiation receiver.

Preferably, in the inspection system the radiation source, the radiation receiver and the means for altering the direction of the radiation beam are distributed such that the path of the first radiation beam extends from the radiation source to the radiation reflecting means, from these means through the first means partially reflecting the radiation, through the interior of the tube, to the second means party reflecting the radiation and to the radiation receiver, wherein the path of the second radiation beam extends from the radiation source to the radiation reflecting means, and from these means through the second means party reflecting the radiation, through the interior of the tube, and to the first means party reflecting the radiation and to the radiation receiver.

Preferably, in the inspection system the radiation sources, the radiation receiver and the means for altering the direction of the radiation beam are distributed such that the path of the first radiation beam from the first radiation source extends through the first means party reflecting the radiation, through the interior of the tube, to the second means party reflecting the radiation and to the radiation receiver, wherein the path of the second radiation beam from the second radiation source extends through the second means party reflecting the radiation, through the interior of the tube, to the first means party reflecting the radiation and to the radiation receiver.

In the inspection system, the image receiver may be connected to an inspection unit for inspecting the quality of the tube.

In the inspection system, the inspection unit may generate a signal to a controller for rejecting the faulty tube.

An object of the invention is also a method for inspecting quality of a tube comprising the steps of: providing the tube to an inspection system; generating two radiation beams; introducing the first radiation beam do the inside of the tube in a first direction; registering an image generated by means of the first radiation beam after propagating through the tube; introducing the second radiation beam do the inside of the tube in a second direction opposite to the first direction; registering an image generated by means of the second radiation beam after propagating through the tube; comparing a contour of tube ends to a circular shape in an inspection unit.

In case of deviation of the registered shape from the circular shape, a signal for rejecting a faulty tube is generated.

### BRIEF DESCRIPTION OF FIGURES

The present invention is shown by means of example embodiments in a drawing, in which:

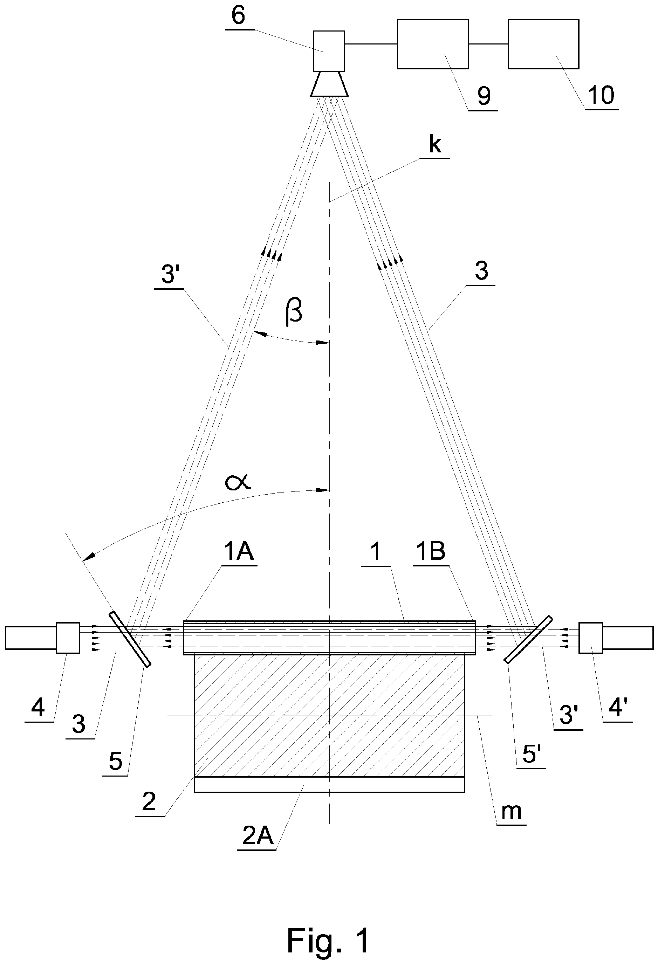

Fig. 1 presents an inspection system in a first embodiment;

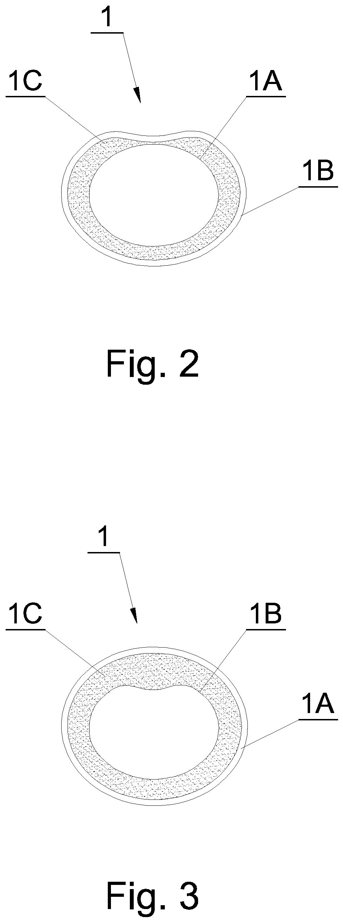

Fig. 2 presents an image of a tube in a view at a first end side;
Fig. 3 presents an image of the tube in a view at a second end side;

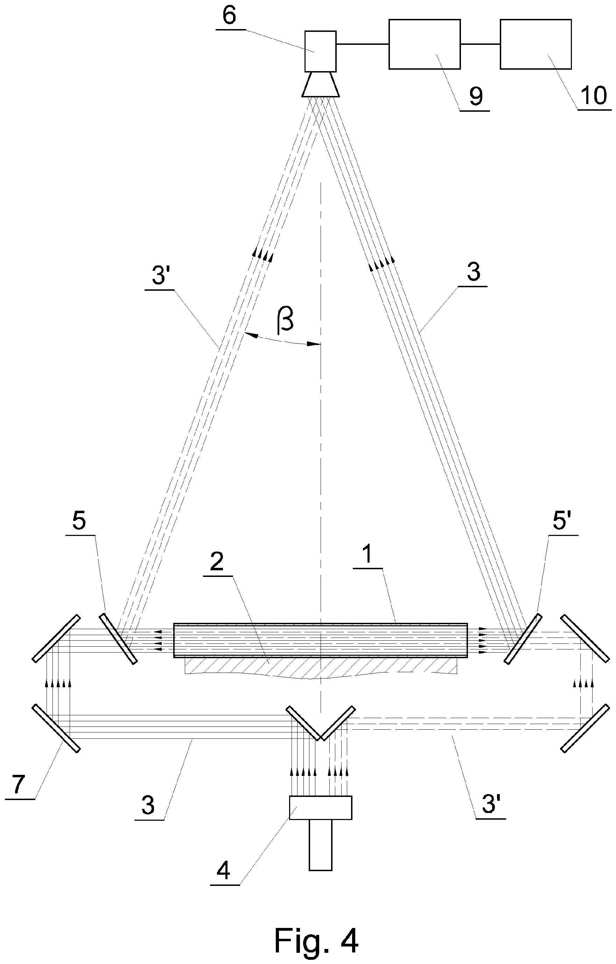

Fig. 4 presents the inspection system in a second embodiment;

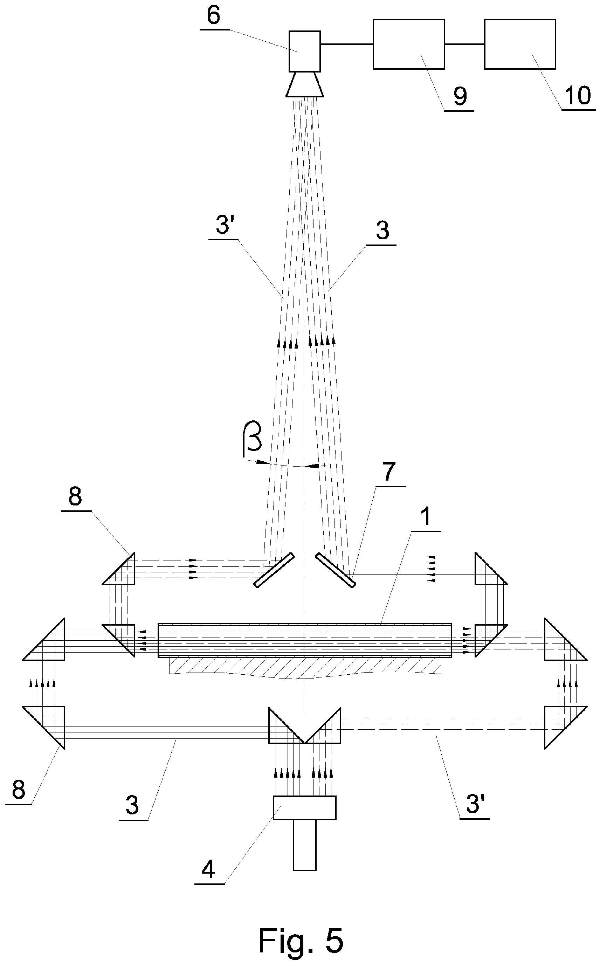

Fig. 5 presents the inspection system in a third embodiment;

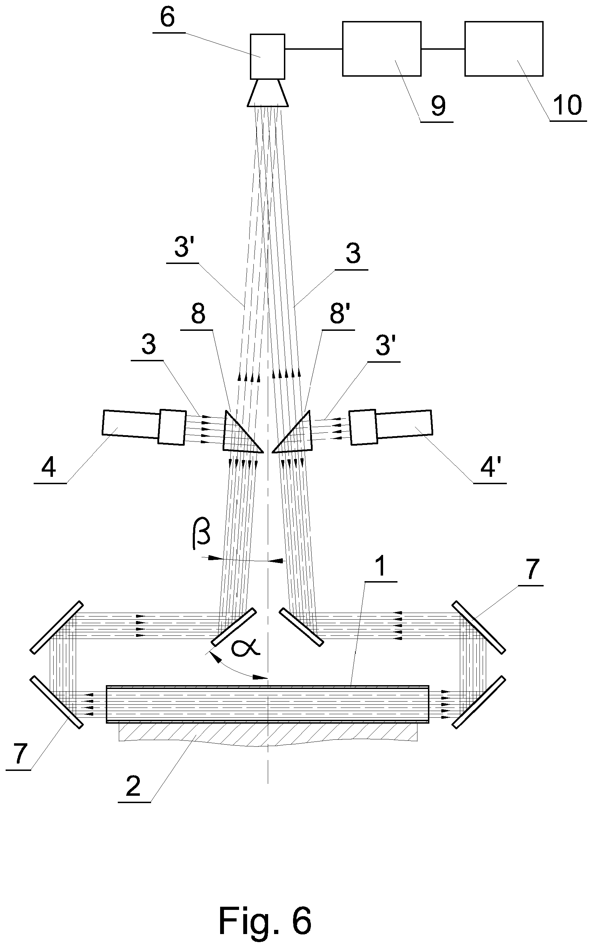

Fig. 6 presents the inspection system in a fourth embodiment;

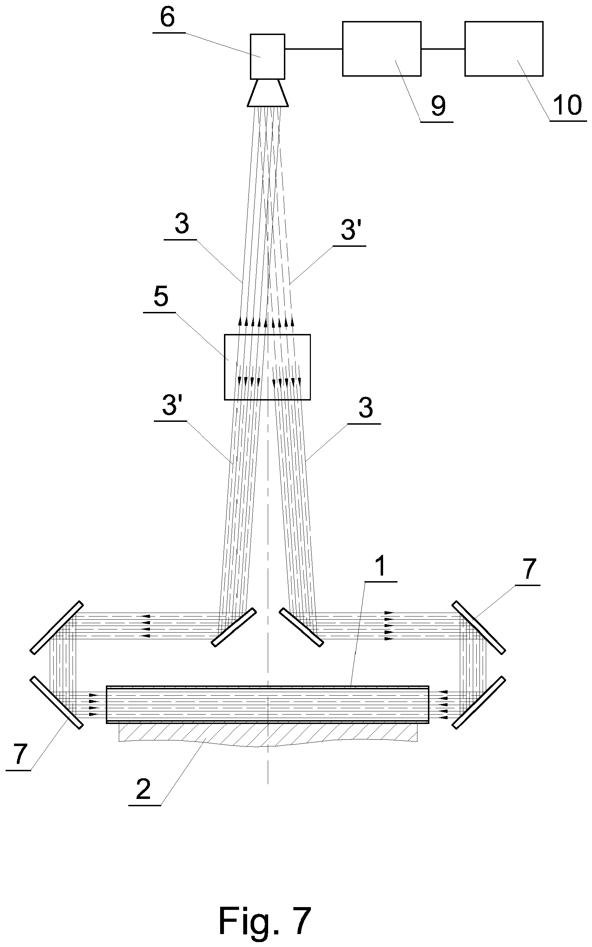

Fig. 7 presents the inspection system in a fifth embodiment;

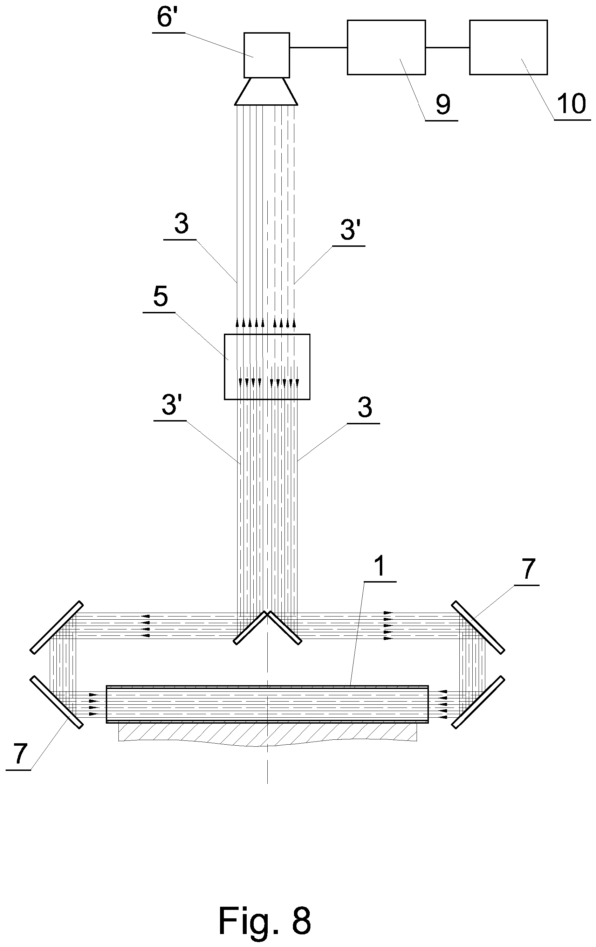

Fig. 8 presents the inspection system in a sixth embodiment;

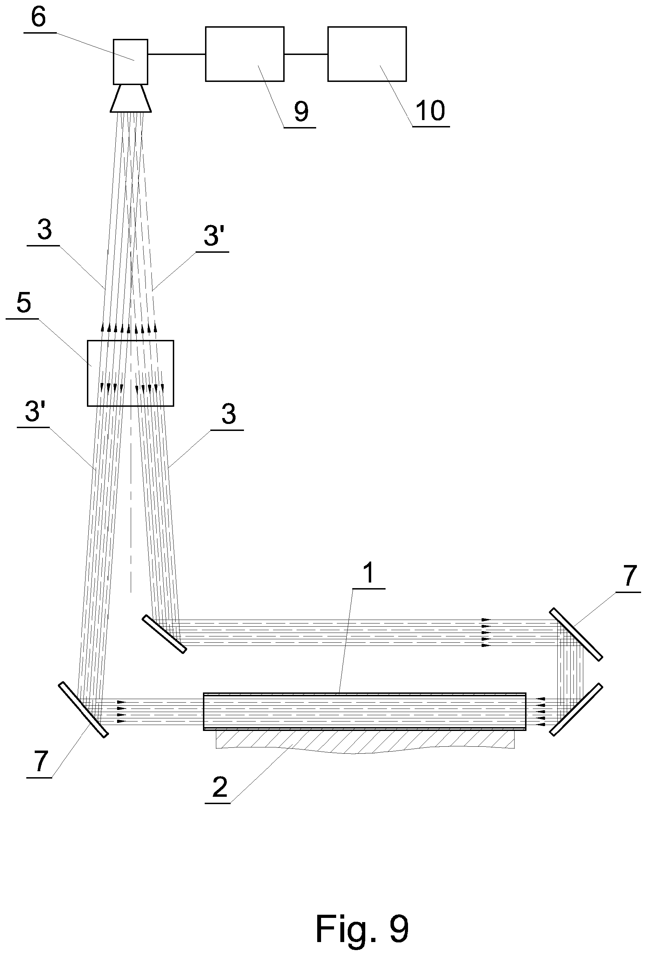

Fig. 9 presents the inspection system in a seventh embodiment;

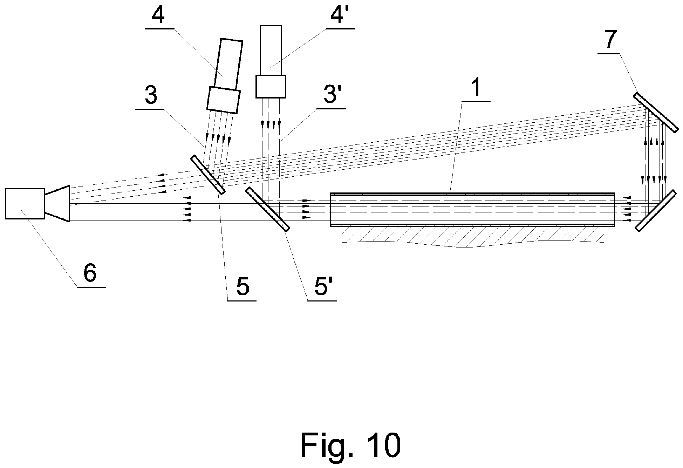

Fig. 10 presents the inspection system in an eighth embodiment; and

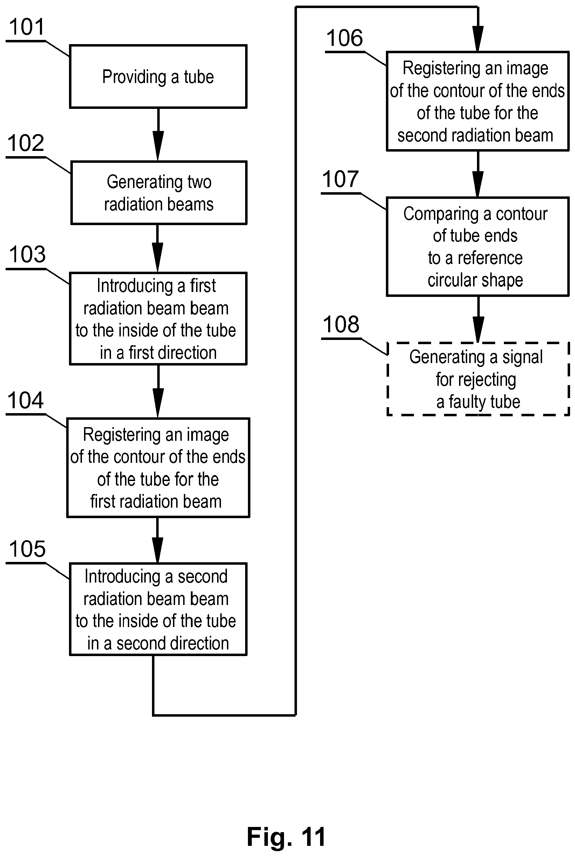

Fig. 11 presents a method for inspecting the quality of the tube;

### DETAILED DESCRIPTION

A tube 1 to be inspected, presented in fig. 1 is located on a transporter 2, for example it may be located in a duct 2A of a belt transporter or of a drum transporter. Locating the tube in the duct provides its stable positioning during inspection (measurement). In an inspection system according to the invention, sources and receivers of electromagnetic radiation in the visual range are used, however it is possible to use electromagnetic radiation in a different range, for example an infrared electromagnetic radiation. In the inspection system, radiation beams may be directed in parallel to each other or divergently, i.e. such that the beam extends in some degree in the direction of incidence. A first radiation beam 3, from a radiation source 4, passes through a semi-transparent mirror 5, and through an interior of the tube 1 in a first direction, wherein the radiation beam 3 after exiting from the tube 1 is reflected from a semi-transparent mirror 5' and propagates to a receiver 6. Instead of the semi-transparent mirror 5, 5', other means may be used for altering the direction of the radiation beam, being means for partially transmitting the radiation, in particular in the visual range, wherein the means for partially transmitting the radiation are also means for partially reflecting the electromagnetic radiation beam. Due to the perspective in the radiation receiver 6, for example in the camera, an image is obtained which shows a contour of an end 1A of the tube 1 which is smaller than a contour 1B as presented in Fig. 2 in an enlarged view. An area 1C being an inner surface of the tube between the ends 1A and 1B is visible on the image obtained in the camera as significantly darker than an area limited by the contour of the end 1A. A second radiation beam 3' from a radiation source 4' passes through the semi-transparent mirror 5' and through the interior of the tube 1 in a second direction opposite to the first direction, wherein the radiation beam 3' after exiting the tube 1 is reflected from the second semi-transparent mirror 5 and propagates to the receiver 6. In the camera an image is obtained which shows the contour 1B of the tube 1 smaller than the contour 1A due to the perspective as presented in fig. 3 in an enlarged view. Inside the tube 1, the first and the second radiation beam 3, 3' propagate in opposite directions. The inspection system presented in fig. 1 has a plane of symmetry k being simultaneously a plane of symmetry of the transporter 2, presented as a rotary drum having axis of rotation m, the semi-transparent mirrors 5, 5' located at an angle α with respect to the plane k such, that the radiation beams 3, 3' reflected from the mirrors 5, 5' propagate convergently towards the receiver 6, wherein each radiation beam 3, 3' propagates at an angle β with respect to the plane k.

The semi-transparent mirrors 5, 5' are mirrors which partially transmit the light incident on them, and partially reflect the light incident on them.

The receiver 6 is connected to an inspection unit 9 for inspecting the quality of the tube, which on the basis of the received image determines if the quality of the tube 1 is appropriate. The inspection unit 9 determines a deviation of the shape with respect to the circular shape, for example it recognizes ovality, multangularity or the detected shape. In case of ovality or a regular or irregular multangularity of one of the ends 1A, 1B of the tube 1, the inspection unit 9 generates a signal to a controller 10 for rejecting the faulty tube 1. The faulty tube 1 may be rejected from the transporter 2 in a known manner or may be rejected further after transmittal to another transporter. The faulty tubes 1 will be also recognized as tubes having deviation from the circular shape of one of their ends 1A, 1B only on a certain section of their circumference. Deformation of both ends 1A, 1B of the tube 1 may indicate on the deformation of the tube 1 on its total length. Deformation towards the inside may signify the indentation of the tube on its total length, while the deformation towards the outside may signify that the tube is glued improperly.

In a second embodiment presented in fig. 4, radiation exiting from the radiation source 4 is divided into two radiation beams 3, 3'. The first radiation beam 3 is reflected from three consecutive mirrors 7, passes through the first semi-transparent mirror 5, and further through the interior of the tube 1 in the first direction and after being reflected from the second semi-transparent mirror 5' it propagates towards the receiver 6. The second radiation beam 3 is reflected from the three consecutive mirrors 7, propagates through the second semi-transparent mirror 5', and further through the interior of the tube 1 in the second direction opposite to the first direction, and after being reflected from the first semi-transparent mirror 5 it propagates towards the receiver 6. Instead of the mirrors 7 and the semi-transparent mirrors 5, 5' other means may be used for altering the direction of the radiation beam, being means for totally or partially reflecting the electromagnetic radiation, in particular in the visible range. According to the present description, means for altering the direction of the radiation beam include means for reflecting the radiation and means for partially reflecting the radiation. Both, the means for reflecting the radiation and means for partially reflecting the radiation may have a form of totally reflecting mirrors or semi-reflecting mirrors or may have a form of totally reflecting optical prisms or semi-reflecting optical prisms.

In a third embodiment presented in fig. 5, having a structure analogous to the embodiment from fig. 4, the mirrors 7 and optical prisms 8 are located on the path of the radiation 3, 3' directed to the interior of the tube 1. In this embodiment the angle β is decreased, and therefore higher convergence of the radiation beams 3, 3' toward the receiver 6 is obtained, which provides lower deformations of the registered image.

In a fourth embodiment presented in fig. 6, the first radiation beam 3 is directed from the radiation source 4 to the first semi-reflecting optical prism 8, and reflected from an inner reflecting surface of said optical prism is directed by means of the mirrors assembly 7 towards the inside of tube 1, and directed through the interior of the tube 1 in the first direction, and directed by the mirrors assembly 7 towards a second semi-reflecting optical prism 8' and further through the second optical prism 8' to the radiation receiver 6. Wherein the second radiation beam 3' is directed from the radiation source 4' to the second semi-reflecting optical prism 8', and reflected from said optical prism is directed by means of the mirrors assembly 7 towards the inside of tube 1, and directed through the interior of the tube 1 in the second direction opposite to the first direction, and directed by the mirrors assembly 7 towards the first optical prism 8 and further through said optical prism is directed to the radiation receiver 6. The radiation beams 3, 3' are directed divergently on the path from the semi-reflecting optical prisms 8, 8' towards the mirrors assembly 7, which directs the radiation beams 3, 3' to the inside of the tube 1. An angle between the first radiation beam 3 and the second radiation beam 3' is equal to 2β. The radiation beams 3, 3' are directed convergently on the path from the mirrors assembly 7 through the semi-reflecting optical prisms 8, 8' to the radiation receiver 6, wherein the angle between the first beam 3 and the second beam 3' is also equal to 2β.

A fifth embodiment presented in fig. 7 is analogous to the fourth embodiment, however the radiation source 4 (not shown in the drawing) is located in front of or behind the presented system (in front of or behind the plane of the drawing), and the radiation from the radiation source 4 is reflected from the semi-transparent mirror 5 (the plane of the mirror is inclined at an angle with respect to the plane of the drawing) and propagates towards the mirrors assembly 7. Further the path of the radiation beams 3, 3' is directed through the interior of the tube 1, to the mirror 7 and through the semi-transparent mirror 5 to the radiation receiver 6. The radiation beams 3, 3' are directed convergently towards the radiation receiver 6. Instead of the mirror, the optical prism may be used with the reflecting surface which is inclined with respect to the plane of the drawing. The radiation beams 3, 3' from the radiation source 4 after being reflected from the semi-reflecting mirror 5 are directed divergently. Instead of the single mirror 5, two mirrors 5, 5' providing reflecting of two beams 3, 3' divergently, may be used.

A sixth embodiment presented in Fig. 8 is analogous to the fifth embodiment, wherein the radiation beams 3, 3' are directed in parallel with respect to each other both on the path from the radiation source to the mirrors 7, which direct the radiation beams to the inside of the tube 1 as well as in the directed towards the radiation receiver 6', which may have a form of a telecentric camera.

A seventh embodiment is a modification of the fifth embodiment, wherein the radiation receiver 6 is located asymmetrically with respect to the transporter 2, and the path of the first radiation beam 3 and the path of the second radiation beam 3' are also asymmetric.

In an eight embodiment presented in fig. 10, the radiation receiver 6 is located axially with respect to the tube 1. The path of the first radiation source 3 extends from the radiation source 4 to the first semi-reflecting mirror 5, to the radiation reflecting mirrors 7, through the inside of the tube 1 in the first direction, and further through the second semi-reflecting mirror 5' to the radiation receiver 6, wherein the path of the second radiation source 3' from the second radiation source 4'extends to the second semi-reflecting mirror 5', and from the mirror 5' extends through the interior of the tube 1 in the second direction opposite to the first direction, and further to the mirrors 7 reflecting the radiation and through the first semi-reflecting mirror 5 to the radiation receiver 6.

Fig. 11 presents a method for inspecting quality of a tube, comprising the steps in which first in step 101 the tube 1 is provided to the inspecting system presented above, preferably by moving it transversally with respect to the axis of the tube. Next, in step 102, two radiation beams are generated, which are introduced to the inside of the tube. Next, in step 103, the first radiation beam is introduced to the inside of the tube in the first direction. In step 104, an image generated by means of the first radiation beam, after propagating through the tube, is registered, wherein the image presents a contour of tube ends in a view towards the inside of the tube for the first radiation beam. Next in step 105, the second radiation beam is introduced to the inside of the tube in the second direction opposite to the first direction. Next, in step 106 an image generated by means of the second radiation beam, after propagating through the tube, is registered, wherein the image presents a contour of tube ends in a view towards the inside of the tube for the second radiation beam. In step 107, in a control unit, the contour of the tube end is compared with respect to the reference circular shape and in case of deviation of the registered shape of the tube end from the circular shape a signal for rejecting a faulty tube may be generated in step 108.

## Claims

1. An inspection system for controlling quality of a tube (1), comprising:
- transporting means (2) for transferring the tube (1) on a transporting path being substantially perpendicular to an axis of the tube (1),
- a radiation source (4, 4'),
- a radiation receiver (6), and
- means for altering a direction of a radiation beam, partially or totally reflecting the radiation, forming the path of the radiation beam from the radiation source (4, 4') through the interior of the tube (1) to the radiation receiver (6),
**characterized in that**:
- the inspection system is configured to:
- generate (102) two radiation beams (3, 3');
- introduce (103, 105) said two radiation beams (3, 3') to the inside of the tube (1) at two opposite ends of the tube (1), such that the radiation beams (3, 3') propagate through the tube (1) in two opposite directions;
- register (104) an image generated by means of the first radiation beam (3) after propagating through the tube (1);
- register (106) an image generated by means of the second radiation beam (3') after propagating through the tube (1);
- compare (107), in an inspection unit (9), a contour of tube ends (1A, 1B) to a circular shape;
- in case of deviation of the registered shape from the circular shape, generate a signal for rejecting a faulty tube (108).

2. The inspection system according to claim 1, **characterized in that** the means for altering the direction of the radiation beam comprise a semi-transparent mirror (5, 5').

3. The inspection system according to claim 1, **characterized in that** the means for altering the direction of the radiation beam comprise a mirror (7).

4. The inspection system according to claim 1, **characterized in that** the means for altering the direction of the radiation beam comprise an optical prism (8).

5. The inspection system according to any of claims 1-4, **characterized in that** the radiation receiver (6) is configured to receive both radiation beams (3, 3').

6. The inspection system according to any of claims 1-5, **characterized in that** the radiation beams (3, 3') propagate in parallel with respect to each other on the path to the radiation receiver (6').

7. The inspection system according to any of claims 1-5, **characterized in that** the radiation beams (3, 3') propagate convergently on the path to the radiation receiver (6).

8. The inspection system according to any of claims 1-7, **characterized in that** the radiation beams (3, 3') propagate in parallel with respect to each other on the path from the radiation source (4, 4').

9. The inspection system according to any of claims 1-7, **characterized in that** the radiation beams (3, 3') propagate divergently on the path from the radiation source (4, 4').

10. The inspection system according to any of claims 1-9, **characterized in that** the radiation source (4, 4'), the radiation receiver (6, 6') and the means (5, 5', 7) for altering the direction of the radiation beam are arranged such that the path of the radiation beam (3, 3') extends from the radiation source (4) to the means (5, 5') partially reflecting the radiation, from these means propagates through the radiation reflecting means (7) through the interior of the tube (1), through radiation reflecting means (7) and propagates through the means (5, 5') partially reflecting the radiation, to the radiation receiver (6, 6').

11. The inspection system according to any of claims 1-9, **characterized in that** the radiation source (4, 4'), the radiation receiver (6) and means (7, 8, 8') for altering the direction of the radiation beam are distributed such that the path of the first radiation beam (3) from the first radiation source (4) extends to the first means (8) partially reflecting the radiation, from these means propagates through radiation reflecting means (7), through the interior of the tube (1), through the radiation reflecting means (7) and propagates through the second means (8') partially reflecting the radiation, to the radiation receiver (6), wherein the path of the second radiation beam (3') from the second radiation source (4') extends to the second means (8') partially reflecting the radiation, from these means propagates through the radiation reflecting means (7) and the interior of the tube (1), through the radiation reflecting means (7) and propagates through the first means (8) partially reflecting the radiation, to the radiation receiver (6).

12. The inspection system according to any of claims 1-9, **characterized in that** the radiation source (4, 4'), the radiation receiver (6) and the means (5, 5', 7) for altering the direction of the radiation beam are distributed such that the path of the first radiation beam (3) extends from the radiation source (4) to the first means (5) partially reflecting the radiation, through the radiation reflecting means (7) through the interior of the tube (1), further through the second means (5') party reflecting the radiation, to the radiation receiver (6), wherein the path of the second radiation beam (3') from the second radiation source (4') extends to the second means (5') partially reflecting the radiation, from these means propagates through the interior of the tube (1), further through the radiation reflecting means (7) and through the first means (5) partially reflecting the radiation, to the radiation receiver (6).

13. The inspection system according to any of claims 1-9, **characterized in that** the radiation source (4), the radiation receiver (6) and the means (5, 5', 7) for altering the direction of the radiation beam are distributed such that the path of the first radiation beam (3) extends from the radiation source (4) to the radiation reflecting means (7), from these means through the first means (5) partially reflecting the radiation, through the interior of the tube (1), to the second means (5') party reflecting the radiation and to the radiation receiver (6), wherein the path of the second radiation beam (3') extends from the radiation source (4) to the radiation reflecting means (7), and from these means through the second means (5') party reflecting the radiation, through the interior of the tube (1), and to the first means (5) party reflecting the radiation and to the radiation receiver (6).

14. The inspection system according to any of claims 1-9, **characterized in that** the radiation sources (4, 4'), the radiation receiver (6) and the means (5, 5', 7) for altering the direction of the radiation beam are distributed such that the path of the first radiation beam (3) from the first radiation source (4) extends through the first means (5) party reflecting the radiation, through the interior of the tube (1), to the second means (5') party reflecting the radiation and to the radiation receiver (6), wherein the path of the second radiation beam (3') from the second radiation source (4') extends through the second means (5') party reflecting the radiation, through the interior of the tube (1), to the first means (5) party reflecting the radiation and to the radiation receiver (6).

15. A method for inspecting a quality of a tube comprising the steps of:
- providing (101) the tube to an inspection system;
- generating (102) two radiation beams;
- introducing (103) the first radiation beam do the inside of the tube in a first direction;
- registering (104) an image generated by means of the first radiation beam after propagating through the tube;
- introducing (105) the second radiation beam do the inside of the tube in a second direction opposite to the first direction;
- registering (106) an image generated by means of the second radiation beam after propagating through the tube;
- comparing (107) a contour of tube ends to a circular shape in an inspection unit;
- in case of deviation of the registered shape from the circular shape a signal for rejecting a faulty tube is generated (108).

## Patentansprüche

1. Prüfsystem zur Kontrolle der Qualität eines Rohrs (1), umfassend:
- Transportmittel (2) zum Überführen des Rohrs (1) auf einem Transportweg, der im Wesentlichen senkrecht zu einer Achse des Rohrs (1) ist,
- eine Strahlungsquelle (4, 4'),
- einen Strahlungsempfänger (6), und
- Mittel zum Ändern einer Richtung eines Strahlenbündels, welche die Strahlung teilweise oder vollständig reflektieren und dadurch den Weg des Strahlenbündels von der Strahlungsquelle (4, 4') durch das Innere des Rohrs (1) zu dem Strahlungsempfänger (6) bilden,
**dadurch gekennzeichnet, dass**:
- das Prüfsystem zu Folgendem konfiguriert ist: Erzeugen (102) von zwei Strahlenbündeln (3, 3');
- Einführen (103, 105) der zwei Strahlenbündel (3, 3') in das Innere des Rohrs (1) an zwei gegenüberliegenden Enden des Rohrs (1), sodass sich die Strahlenbündel (3, 3') in zwei entgegengesetzten Richtungen durch das Rohr (1) ausbreiten;
- Registrieren (104) eines Bildes, das mithilfe des ersten Strahlenbündels (3) erzeugt wird, nachdem es sich durch das Rohr (1) ausgebreitet hat;
- Registrieren (106) eines Bildes, das mithilfe des zweiten Strahlenbündels (3') erzeugt wird, nachdem es sich durch das Rohr (1) ausgebreitet hat;
- Vergleichen (107), in einer Prüfeinheit (9), einer Kontur von Rohrenden (1A, 1B) mit einer Kreisform;
- im Falle einer Abweichung der registrierten Form von der Kreisform, Erzeugen eines Signals zum Aussortieren eines fehlerhaften Rohrs (108).

2. Prüfsystem nach Anspruch 1, **dadurch gekennzeichnet, dass** die Mittel zum Ändern der Richtung des Strahlenbündels einen halbdurchlässigen Spiegel (5, 5') umfassen.

3. Prüfsystem nach Anspruch 1, **dadurch gekennzeichnet, dass** die Mittel zum Ändern der Richtung des Strahlenbündels einen Spiegel (7) umfassen.

4. Prüfsystem nach Anspruch 1, **dadurch gekennzeichnet, dass** die Mittel zum Ändern der Richtung des Strahlenbündels ein optisches Prisma (8) umfassen.

5. Prüfsystem nach einem der Ansprüche 1-4, **dadurch gekennzeichnet, dass** der Strahlungsempfänger (6) dazu konfiguriert ist, beide Strahlenbündel (3, 3') zu empfangen.

6. Prüfsystem nach einem der Ansprüche 1-5, **dadurch gekennzeichnet, dass** sich die Strahlenbündel (3, 3') auf dem Weg zu dem Strahlungsempfänger (6') parallel zueinander ausbreiten.

7. Prüfsystem nach einem der Ansprüche 1-5, **dadurch gekennzeichnet, dass** sich die Strahlenbündel (3, 3') auf dem Weg zu dem Strahlungsempfänger (6) konvergent ausbreiten.

8. Prüfsystem nach einem der Ansprüche 1-7, **dadurch gekennzeichnet, dass** sich die Strahlenbündel (3, 3') auf dem Weg von der Strahlungsquelle (4, 4') parallel zueinander ausbreiten.

9. Prüfsystem nach einem der Ansprüche 1-7, **dadurch gekennzeichnet, dass** sich die Strahlenbündel (3, 3') auf dem Weg von der Strahlungsquelle (4, 4') divergierend ausbreiten.

10. Prüfsystem nach einem der Ansprüche 1-9, **dadurch gekennzeichnet, dass** die Strahlungsquelle (4, 4'), der Strahlungsempfänger (6, 6') und die Mittel (5, 5', 7) zum Ändern der Richtung des Strahlenbündels derart angeordnet sind, dass sich der Weg des Strahlenbündels (3, 3') von der Strahlungsquelle (4) zu den Mitteln (5, 5') erstreckt, welche die Strahlung teilweise reflektieren, sich von diesen Mitteln durch die strahlungsreflektierenden Mittel (7) durch das Innere des Rohrs (1) ausbreitet, sich durch die strahlungsreflektierenden Mittel (7) und durch die Mittel (5, 5'), welche die Strahlung teilweise reflektieren, zu dem Strahlungsempfänger (6, 6') ausbreitet.

11. Prüfsystem nach einem der Ansprüche 1-9, **dadurch gekennzeichnet, dass** die Strahlungsquelle (4, 4'), der Strahlungsempfänger (6) und die Mittel (7, 8, 8') zum Ändern der Richtung des Strahlenbündels derart verteilt sind, dass sich der Weg des ersten Strahlenbündels (3) von der ersten Strahlungsquelle (4) zu den ersten Mitteln (8) erstreckt, welche die Strahlung teilweise reflektieren, sich von diesen Mitteln durch die strahlungsreflektierenden Mittel (7), durch das Innere des Rohrs (1), durch die strahlungsreflektierenden Mittel (7) ausbreitet und durch die zweiten Mittel (8'), welche die Strahlung teilweise reflektieren, zu dem Strahlungsempfänger (6) ausbreitet, wobei sich der Weg des zweiten Strahlenbündels (3') von der zweiten Strahlungsquelle (4') zu den zweiten Mitteln (8') erstreckt, welche die Strahlung teilweise reflektieren, sich von diesen Mitteln durch die strahlungsreflektierenden Mittel (7) und das Innere des Rohrs (1), durch die strahlungsreflektierenden Mittel (7) ausbreitet und sich durch die ersten Mittel (8), welche die Strahlung teilweise reflektieren, zu dem Strahlungsempfänger (6) ausbreitet.

12. Prüfsystem nach einem der Ansprüche 1-9, **dadurch gekennzeichnet, dass** die Strahlungsquelle (4, 4'), der Strahlungsempfänger (6) und die Mittel (5, 5', 7) zum Ändern der Richtung des Strahlenbündels derart verteilt sind, dass sich der Weg des ersten Strahlenbündels (3) von der Strahlungsquelle (4) zu den ersten Mitteln (5), welche die Strahlung teilweise reflektieren, durch die strahlungsreflektierenden Mittel (7), durch das Innere des Rohrs (1), ferner durch die zweiten Mittel (5'), welche die Strahlung Partei reflektieren, zu dem Strahlungsempfänger (6) erstreckt, wobei sich der Weg des zweiten Strahlenbündels (3') von der zweiten Strahlungsquelle (4') zu den zweiten Mitteln (5') erstreckt, welche die Strahlung teilweise reflektieren, sich von diesen Mitteln durch das Innere des Rohrs (1), ferner durch die strahlungsreflektierenden Mittel (7) und durch die ersten Mittel (5), welche die Strahlung teilweise reflektieren, zu dem Strahlungsempfänger (6) ausbreitet.

13. Prüfsystem nach einem der Ansprüche 1-9, **dadurch gekennzeichnet, dass** die Strahlungsquelle (4), der Strahlungsempfänger (6) und die Mittel (5, 5', 7) zum Ändern der Richtung des Strahlenbündels derart verteilt sind, dass sich der Weg des ersten Strahlenbündels (3) von der ersten Strahlungsquelle (4) zu den strahlungsreflektierenden Mitteln (7), von diesen Mitteln durch die ersten Mittel (5), welche die Strahlung teilweise reflektieren, durch das Innere des Rohrs (1), zu den zweiten Mitteln (5'), welche die Strahlung Partei reflektieren, und zu dem Strahlungsempfänger (6) erstreckt, wobei sich der Weg des zweiten Strahlenbündels (3') von der Strahlungsquelle (4) zu den strahlungsreflektierenden Mitteln (7) und von diesen Mitteln durch die zweiten Mittel (5'), welche die Strahlung Partei reflektieren, durch das Innere des Rohrs (1) und zu den ersten Mitteln (5), welche die Strahlung Partei reflektieren, und zu dem Strahlungsempfänger (6) erstreckt.

14. Prüfsystem nach einem der Ansprüche 1-9, **dadurch gekennzeichnet, dass** die Strahlungsquellen (4, 4'), der Strahlungsempfänger (6) und die Mittel (5, 5', 7) zum Ändern der Richtung des Strahlenbündels derart verteilt sind, dass sich der Weg des ersten Strahlenbündels (3) von der ersten Strahlungsquelle (4) durch die ersten Mittel (5), welche die Strahlung Partei reflektieren, durch das Innere des Rohrs (1) zu den zweiten Mitteln (5'), welche die Strahlung Partei reflektieren, und zu dem Strahlungsempfänger (6) erstreckt, wobei sich der Weg des zweiten Strahlenbündels (3') von der zweiten Strahlungsquelle (4') durch die zweiten Mittel (5'), welche die Strahlung Partei reflektieren, durch das Innere des Rohrs (1) zu den ersten Mitteln (5), welche die Strahlung Partei reflektieren, zu dem Strahlungsempfänger (6) erstreckt.

15. Verfahren zur Prüfung einer Qualität eines Rohrs, umfassend die Folgenden Schritte:
- Bereitstellen (101) des Rohrs an einem Prüfsystem;
- Erzeugen (102) von zwei Strahlenbündeln;
- Einführen (103) des ersten Strahlenbündels macht das Innere des Rohrs in einer ersten Richtung;
- Registrieren (104) eines Bildes, das mithilfe des ersten Strahlenbündels erzeugt wird, nachdem es sich durch das Rohr ausgebreitet hat;
- Einführen (105) des zweiten Strahlenbündels macht das Innere des Rohrs in einer zweiten Richtung, die der ersten Richtung entgegengesetzt ist;
- Registrieren (106) eines Bildes, das mithilfe des zweiten Strahlenbündels erzeugt wird, nachdem es sich durch das Rohr ausgebreitet hat;
- Vergleichen (107) einer Kontur von Rohrenden mit einer Kreisform in einer Prüfeinheit;
- im Falle einer Abweichung der registrierten Form von der Kreisform wird ein Signal zum Aussortieren eines fehlerhaften Rohrs erzeugt (108).

## Revendications

1. Système d'inspection destiné à contrôler la qualité d'un tube (1), comprenant :
- un moyen de transport (2) destiné à transférer le tube (1) sur un traj et de transport qui est sensiblement perpendiculaire à un axe du tube (1),
- une source de rayonnement (4, 4'),
- un récepteur de rayonnement (6), et
- un moyen pour modifier une direction d'un faisceau de rayonnement, réfléchissant partiellement ou totalement le rayonnement, formant le trajet du faisceau de rayonnement allant de la source de rayonnement (4, 4') à travers l'intérieur du tube (1) jusqu'au récepteur de rayonnement (6),
**caractérisé en ce que** :
- le système d'inspection est conçu pour : générer (102) deux faisceaux de rayonnement (3, 3');
- introduire (103, 105) lesdits deux faisceaux de rayonnement (3, 3') à l'intérieur du tube (1) au niveau des deux extrémités opposées du tube (1), de sorte que les faisceaux de rayonnement (3, 3') se propagent à travers le tube (1) dans deux directions opposées ;
- enregistrer (104) une image générée au moyen du premier faisceau de rayonnement (3) après propagation à travers le tube (1) ;
- enregistrer (106) une image générée au moyen du second faisceau de rayonnement (3') après propagation à travers le tube (1) ;
- comparer (107), dans une unité d'inspection (9), un contour d'extrémités de tube (1A, 1B) à une forme circulaire ;
- en cas d'écart de la forme enregistrée par rapport à la forme circulaire, générer un signal pour rejeter un tube défectueux (108).

2. Système d'inspection selon la revendication 1, **caractérisé en ce que** les moyens pour modifier la direction du faisceau de rayonnement comprennent un miroir semi-transparent (5, 5').

3. Système d'inspection selon la revendication 1, **caractérisé en ce que** les moyens pour modifier la direction du faisceau de rayonnement comprennent un miroir (7).

4. Système d'inspection selon la revendication 1, **caractérisé en ce que** les moyens pour modifier la direction du faisceau de rayonnement comprennent un prisme optique (8).

5. Système d'inspection selon l'une quelconque des revendications 1 à 4, **caractérisé en ce que** le récepteur de rayonnement (6) est conçu pour recevoir les deux faisceaux de rayonnement (3, 3').

6. Système d'inspection selon l'une quelconque des revendications 1 à 5, **caractérisé en ce que** les faisceaux de rayonnement (3, 3') se propagent en parallèle l'un par rapport à l'autre sur le trajet jusqu'au récepteur de rayonnement (6').

7. Système d'inspection selon l'une quelconque des revendications 1 à 5, **caractérisé en ce que** les faisceaux de rayonnement (3, 3') se propagent de manière convergente sur le trajet jusqu'au récepteur de rayonnement (6).

8. Système d'inspection selon l'une quelconque des revendications 1 à 7, **caractérisé en ce que** les faisceaux de rayonnement (3, 3') se propagent en parallèle l'un par rapport à l'autre sur le trajet à partir de la source de rayonnement (4, 4').

9. Système d'inspection selon l'une quelconque des revendications 1 à 7, **caractérisé en ce que** les faisceaux de rayonnement (3, 3') se propagent de manière divergente sur le trajet à partir de la source de rayonnement (4, 4').

10. Système d'inspection selon l'une quelconque des revendications 1 à 9, **caractérisé en ce que** la source de rayonnement (4, 4'), le récepteur de rayonnement (6, 6') et les moyens (5, 5', 7) pour modifier la direction du faisceau de rayonnement sont agencés de sorte que le trajet du faisceau de rayonnement (3, 3') s'étende à partir de la source de rayonnement (4) jusqu'aux moyens (5, 5') réfléchissant partiellement le rayonnement, à partir de ces moyens se propage à travers les moyens de réflexion du rayonnement (7) à travers l'intérieur du tube (1), à travers des moyens de réflexion du rayonnement (7) et se propage à travers les moyens (5, 5') réfléchissant partiellement le rayonnement, jusqu'au récepteur de rayonnement (6, 6').

11. Système d'inspection selon l'une quelconque des revendications 1 à 9, **caractérisé en ce que** la source de rayonnement (4, 4'), le récepteur de rayonnement (6) et les moyens (7, 8, 8') pour modifier la direction du faisceau de rayonnement sont répartis de sorte que le trajet du premier faisceau de rayonnement (3) à partir de la première source de rayonnement (4) s'étende jusqu'aux premiers moyens (8) réfléchissant partiellement le rayonnement, à partir de ces moyens se propage à travers des moyens de réflexion du rayonnement (7), à travers l'intérieur du tube (1), à travers les moyens de réflexion du rayonnement (7) et se propage à travers les seconds moyens (8') réfléchissant partiellement le rayonnement, jusqu'au récepteur de rayonnement (6), ledit trajet du second faisceau de rayonnement (3') à partir de la seconde source de rayonnement (4') s'étendant jusqu'aux seconds moyens (8') réfléchissant partiellement le rayonnement, à partir de ces moyens se propageant à travers les moyens de réflexion du rayonnement (7) et l'intérieur du tube (1), à travers les moyens de réflexion du rayonnement (7) et se propageant à travers les premiers moyens (8) réfléchissant partiellement le rayonnement, jusqu'au récepteur de rayonnement (6).

12. Système d'inspection selon l'une quelconque des revendications 1 à 9, **caractérisé en ce que** la source de rayonnement (4, 4'), le récepteur de rayonnement (6) et les moyens (5, 5', 7) pour modifier la direction du faisceau de rayonnement sont répartis de sorte que le trajet du premier faisceau de rayonnement (3) s'étende à partir de la source de rayonnement (4) jusqu'aux premiers moyens (5) réfléchissant partiellement le rayonnement, à travers les moyens de réflexion du rayonnement (7) à travers l'intérieur du tube (1), plus loin à travers les seconds moyens (5') réfléchissant partie le rayonnement, jusqu'au récepteur de rayonnement (6), ledit trajet du second faisceau de rayonnement (3') à partir de la seconde source de rayonnement (4') s'étendant jusqu'aux seconds moyens (5') réfléchissant partiellement le rayonnement, à partir de ces moyens se propageant à travers l'intérieur du tube (1), plus loin à travers les moyens de réflexion du rayonnement (7) et à travers les premiers moyens (5) réfléchissant partiellement le rayonnement, jusqu'au récepteur de rayonnement (6).

13. Système d'inspection selon l'une quelconque des revendications 1 à 9, **caractérisé en ce que** la source de rayonnement (4), le récepteur de rayonnement (6) et les moyens (5, 5', 7) pour modifier la direction du faisceau de rayonnement sont répartis de sorte que le trajet du premier faisceau de rayonnement (3) s'étende à partir de la source de rayonnement (4) jusqu'aux moyens de réflexion de rayonnement (7), à partir de ces moyens à travers les premiers moyens (5) réfléchissant partiellement le rayonnement, à travers l'intérieur du tube (1), jusqu'aux seconds moyens (5') partie réfléchissant le rayonnement et jusqu'au récepteur de rayonnement (6), ledit trajet du second faisceau de rayonnement (3') s'étendant à partir de la source de rayonnement (4) jusqu'aux moyens de réflexion de rayonnement (7), et à partir de ces moyens à travers les seconds moyens (5') partie réfléchissant le rayonnement, à travers l'intérieur du tube (1), et jusqu'aux premiers moyens (5) partie réfléchissant le rayonnement et jusqu'au récepteur de rayonnement (6).

14. Système d'inspection selon l'une quelconque des revendications 1 à 9, **caractérisé en ce que** les sources de rayonnement (4, 4'), le récepteur de rayonnement (6) et les moyens (5, 5', 7) pour modifier la direction du faisceau de rayonnement sont répartis de sorte que le trajet du premier faisceau de rayonnement (3) à partir de la première source de rayonnement (4) s'étende à travers les premiers moyens (5) partie réfléchissant le rayonnement, à travers l'intérieur du tube (1), jusqu'aux seconds moyens (5') partie réfléchissant le rayonnement et jusqu'au récepteur de rayonnement (6), ledit trajet du second faisceau de rayonnement (3') à partir de la seconde source de rayonnement (4') s'étendant à travers les seconds moyens (5') partie réfléchissant le rayonnement, à travers l'intérieur du tube (1), jusqu'aux premiers moyens (5) partie réfléchissant le rayonnement et jusqu'au récepteur de rayonnement (6).

15. Procédé permettant l'inspection de la qualité d'un tube comprenant les étapes de :
- fourniture (101) du tube à un système d'inspection ;
- génération (102) de deux faisceaux de rayonnement ;
- introduction (103) du premier faisceau de rayonnement faire l'intérieur du tube dans une première direction ;
- enregistrement (104) d'une image générée au moyen du premier faisceau de rayonnement après propagation à travers le tube ;
- introduction (105) du second faisceau de rayonnement faire l'intérieur du tube dans une second direction opposée à la première direction ;
- enregistrement (106) d'une image générée au moyen du second faisceau de rayonnement après propagation à travers le tube ;
- comparaison (107) d'un contour d'extrémités de tube à une forme circulaire dans une unité d'inspection ;
- en cas d'écart de la forme enregistrée par rapport à la forme circulaire, un signal pour rejeter un tube défectueux est généré (108).
